# EUROPÄISCHE PATENTSCHRIFT

(11) **EP 2 013 961 B1**
(45) Veröffentlichungstag und Bekanntmachung des Hinweises auf die Patenterteilung: **14.06.2017**
(21) Anmeldenummer: 07727908.1
(22) Anmeldetag: 10.04.2007
(51) Int. Cl.: H02K 15/00

(54) **VERFAHREN ZUR HERSTELLUNG EINER STABWICKLUNG FÜR DEN STATOR EINER ELEKTRISCHEN MASCHINE**
METHOD FOR PRODUCING A BAR WINDING FOR THE STATOR OF AN ELECTRIC MACHINE
PROCÉDÉ DE FABRICATION D'UN ENROULEMENT À CAGE D'ÉCUREUIL POUR LE STATOR D'UN MOTEUR ÉLECTRIQUE

(30) Priorität: 26.04.2006 DE 102006019312
(43) Veröffentlichungstag der Anmeldung: 14.01.2009
(73) Patentinhaber: Robert Bosch GmbH, 70442 Stuttgart (DE)
(72) Erfinder: BERGER, Thomas, 71254 Ditzingen (DE); SCHWARZKOPF, Christoph, 74399 Walheim (DE)
(86) Internationale Anmeldenummer: PCT/EP2007/053440
(87) Internationale Veröffentlichungsnummer: WO 2007/125010

(56) Entgegenhaltungen:
- EP-A1- 1 128 527
- DE-A1- 10 315 361
- FR-A1- 2 808 938
- GB-A- 147 790
- US-A- 4 032 057
- US-A1- 2003 024 101

## Beschreibung

### Stand der Technik

Die Erfindung geht aus von einem Verfahren zur Herstellung einer Stabwicklung für den Stator einer elektrischen Maschine, insbesondere eines Klauenpolgenerators für Kraftfahrzeuge, wie es grundsätzlich aus der DE 40 31 276 A bekannt geworden ist. Diese Druckschrift offenbart ein Verfahren zur Herstellung eines Ständers für elektrische Maschinen, dessen Stabwicklung aus vier paarweise in den Nuten übereinander liegenden Wicklungsstäben hergestellt ist, die haarnadelförmig vorgebogen und mit einem Spreizschritt von einer Polteilung in die Blechpaketnuten eingesteckt sind. Die Enden der Wicklungsstäbe sind auf beiden Seiten des Blechpaketes gegeneinander verschränkt und auf eine Seite des Blechpaketes paarweise durch Schweißen oder Löten galvanisch miteinander verbunden. Die Druckschrift macht keine detaillierten Angaben zu dem verwendeten Verbindungsverfahren für die Enden der Wicklungsstäbe. Aus der FR2 808 938 ist auch eine
gleichartige Verfahren zur Herstellung
einer Stabwicklung bekant.

### Offenbarung der Erfindung

Das erfindungsgemäße Verfahren bietet gegenüber dem Stand der Technik die Möglichkeit, unter Verwendung des grundsätzlich bekannten Verfahrens der Widerstandsschweißung auch bei Wicklungsanordnungen mit vier oder mehr übereinander liegenden Leitersegmenten und dem hierbei verbleibenden sehr geringen Arbeitsraum für die notwendigen Verbindungen mit geringem fertigungstechnischem Aufwand mechanisch und elektrisch sichere und dauerhafte Verbindungen im Wickelkopf des Stators herzustellen. Hierbei ergeben sich insbesondere bei einer Anordnung mit vier, im Wickelkopf radial übereinander angeordneten Leitersegmenten sowohl hinsichtlich der Anordnung der Stabenden als auch hinsichtlich der Gestaltung der Schweißelektroden besonders vorteilhafte Konfigurationen.

Ein sehr einfaches und vorteilhaftes Verfahren besteht darin, bei zwei im Wickelkopf radial übereinander liegenden Leiterpaaren die elektrischen Verbindungen gleichzeitig oder nacheinander durch die Elektroden herzustellen, indem jeweils ein Leitersegment jedes Paares radial und wenigstens ein Leitersegment axial von einer Elektrode kontaktiert und der Schweißstrom hierbei um 90° umgelenkt wird. Zweckmäßigerweise werden hierbei die außen liegenden Leitersegmente von zwei zu verbindenden Leiterpaaren jeweils von einer separaten, radial arbeitenden Elektrode und die beiden mittleren Leitersegmente von einer gemeinsamen, axial arbeitenden Elektrode kontaktiert. Diese Arbeitsweise ist insbesondere dann vorteilhaft, wenn die Enden der innen liegenden Leitersegmente von zwei Leiterpaaren weiter aus dem Blechpaket des Stators herausragen als die äußeren Leitersegmente, weil die inneren Leitersegmente dann besser zugänglich sind und hierbei auch eine verschleißärmere Elektrode mit größerem Querschnitt verwendet werden kann. Zusätzlich bietet diese Arbeitsweise die Möglichkeit ohne mechanische Nacharbeit unterschiedlich weit aus dem Blechpaket des Stators herausragende Enden der inneren Leitersegmente zunächst durch die Elektrode auf gleiche Länge abzuschmelzen und danach gemeinsam zu kontaktieren.

Eine besonders vorteilhafte Ausgestaltung des erfindungsgemäßen Verfahrens ergibt sich, wenn die Enden der innen liegenden Leitersegmente von zwei Leiterpaaren weiter aus dem Blechpaket des Stators herausragen als die äußeren Leitersegmente und alle Leitersegmente beim Schweißvorgang radial von den Elektroden kontaktiert werden. Diese Arbeitsweise bietet insbesondere den Vorteil, dass beim Schweißvorgang keine axialen Kräfte auf die Leitersegmente wirken und die radialen Kräfte ohne zusätzliche mechanische Arretierung in vollem Umfang von den Schweißelektroden aufgefangen werden können.

Das erfindungsgemäße Verfahren ist mit Vorteil auch bei einer Anordnung mit mehr als vier, beispielsweise mit sechs im Wickelkopf radial übereinander angeordneten und paarweise miteinander zu verbindenden Leitersegmenten anwendbar, indem entweder die Enden aller Leiterpaare beim Schweißvorgang axial von den Elektroden kontaktiert werden. Stattdessen können jedoch auch die außen liegenden Leitersegmente der äußeren zu verbindenden Leiterpaare jeweils von einer radial arbeitenden Elektrode kontaktiert werden, wobei wiederum die radial arbeitenden Elektroden die in radialer Richtung wirkenden Kräfte beim Schweißvorgang aufnehmen, so dass nur die axial wirkenden Kräfte durch eine separate Einspannvorrichtung aufgefangen werden müssen.

### Kurze Beschreibung der Zeichnungen

Ausführungsbeispiele der Erfindung sind in den Zeichnungen dargestellt und in der nachfolgenden Beschreibung näher erläutert. Es zeigen
- Fig. 1: eine perspektivische Ansicht eines Stators mit einer Stabwicklung mit für den Schweißvorgang vorgeformten Enden der Leitersegmente,
- Fig. 2: einen Teilschnitt durch das Blechpaket des Stators mit radial verlaufenden Nuten mit jeweils vier übereinander angeordneten Leitersegmenten,
- Fig. 3a: eine schematische Schnittdarstellung mit vier im Wickelkopf des Stators übereinander angeordneten, paarweise verschweißten Leitersegmenten,
- Fig. 3b: eine schematische Darstellung einer Wellenwicklung mit einer Schweißverbindung eines Leiterpaares,
- Fig. 4: eine Anordnung mit vier im Wickelkopf radial übereinander angeordneten und paarweise miteinander zu verbindenden, gleich langen Leitersegmenten,
- Fig. 5: eine Anordnung mit vier im Wickelkopf radial übereinander angeordneten und paarweise miteinander zu verbindenden Leitersegmenten, wobei die beiden mittleren Segmente weiter aus dem Blechpaket des Stators herausragen als die äußeren Segmente,
- Fig. 6: eine Anordnung gemäß Figur 5 mit ausschließlich radialer Kontaktierung der Enden der Leitersegmente und
- Fig. 7: eine Anordnung mit sechs in einer Nut und im Wickelkopf radial übereinander angeordneten und paarweise miteinander verbundenen Leitersegmenten.
Ausführungsformen der Erfindung

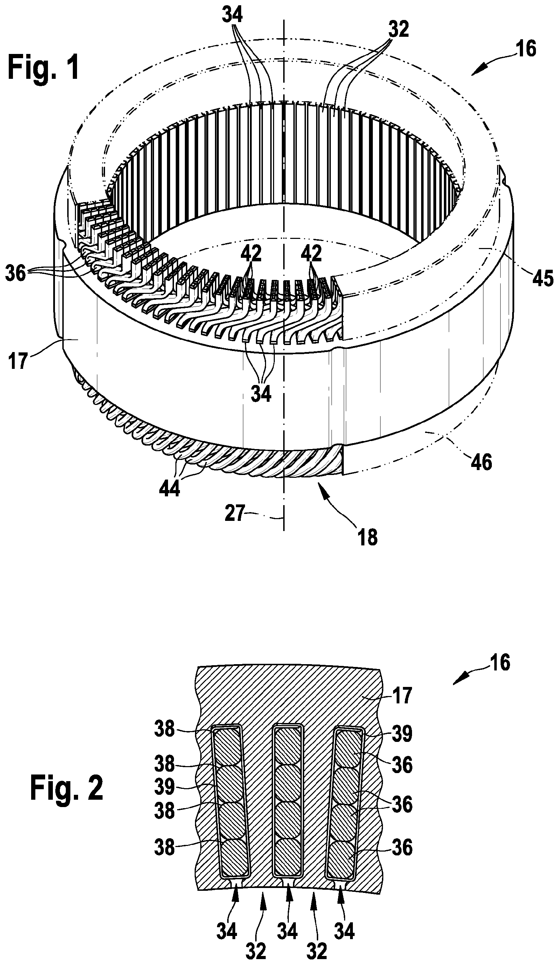

Fig. 1 zeigt eine perspektivische, schematisierte Darstellung eines Stators 16 einer elektrischen Maschine, wie er beispielsweise in einem Klauenpolgenerator für Kraftfahrzeuge verwendet wird. An der inneren Oberfläche des Stators 16 sind Pole 32 und Nuten 34 erkennbar, in denen jeweils vier Leitersegmente 36 radial übereinander angeordnet sind. Die Leitersegmente sind in bekannter Weise an der Unterseite des Stators 16 haarnadelförmig umgebogen und um jeweils eine Polteilung geschränkt. Ihre gleich langen, freien Enden 42 ragen an der Oberseite des Stators 16, ebenfalls um eine Polteilung geschränkt, aus den Nuten 34 heraus und sind in vier konzentrischen Reihen angeordnet. Hierbei liegen nach dem Zusammenbau der elektrischen Maschine die freien Enden 42 im antriebsseitigen Wickelkopf 45 des Stators, während die haarnadelförmigen Umlenkungen 44 am gegenüberliegenden Wickelkopf 46 des Stators 16 herausragen, welcher nach dem Zusammenbau der elektrischen Maschine zu deren Verschaltungsseite hin ausgerichtet ist. Diese Anordnung hat den Vorteil, dass im antriebsseitigen Wickelkopf 45 mehr Raum für die Schweißverbindungen zur Verfügung steht. Die Maschinenachse ist mit 27 bezeichnet.

Fig. 2 zeigt in vergrößerter Darstellung einen Schnitt durch das Blechpaket 17 des Stators 16, wobei in jeder Nut 34 vier Leitersegmente 36 radial übereinander angeordnet sind. Die Leitersegmente sind einerseits an ihrer Oberfläche durch eine Lackisolation 38 und andererseits gemeinsam durch Isolationseinlagen 39 gegen das Blechpaket 17 des Stators 16 isoliert. Das Einbringen der Leitersegmente 36 der als Stabwicklung ausgebildeten Statorwicklung 18 erfolgt durch axiales Einschieben der Leitersegmente 36 in die Nuten 34.

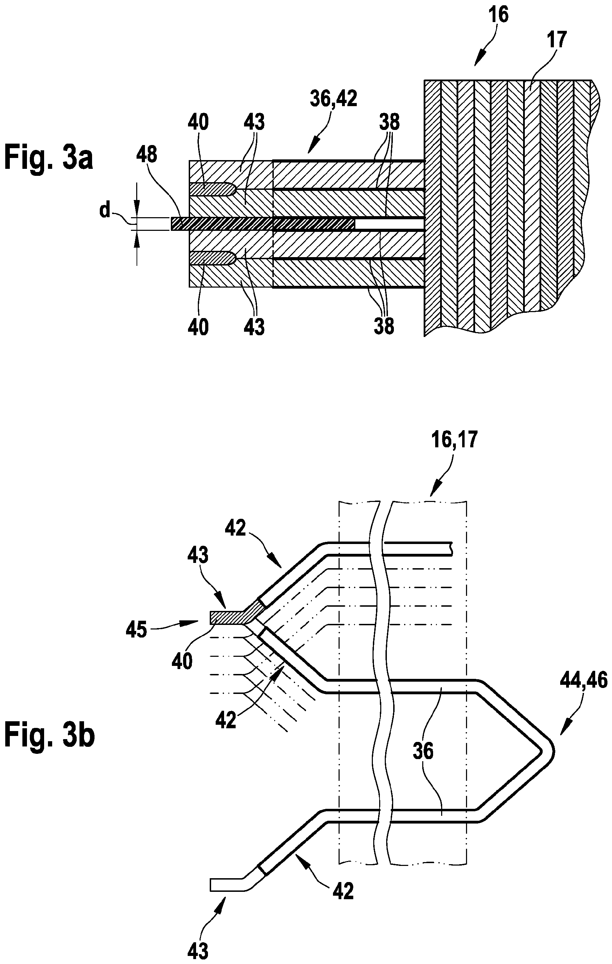

Fig. 3 zeigt in der Abbildung a in schematisierter Form einen Teilschnitt durch das Blechpaket 17 des Stators 16, aus dem die freien Enden 42 der Statorwicklung 18 herausragen. Die Enden 42 der Statorwicklung 18 sind im vorderen Bereich 43 von der Lackisolation 38 befreit, so dass der Schweißstrom in diesem Bereich sowohl radial wie auch axial ungehindert fließen und einen Schweißbereich 40 aufschmelzen kann. Zwischen den nicht zu verschweißenden Enden 42 der Leitersegmente 36 ist ein Abstand d belassen, in den zusätzlich eine bandförmige Isolation 48 eingebracht werden kann, beispielsweise ein Kunststoff- oder Keramikband.

Die Fig. 3b zeigt die haarnadelförmige Umlenkung 44 zwischen den Leitersegmenten 36 im Bereich des von der Antriebsseite abgewandten Wickelkopfes 46, die Spreizung der Leitersegmente 36 um eine Polteilung und die Abkröpfung der freien Enden 42 zu den Schweißbereichen 40 hin. Auf die erfindungsgemäße Verschweißung der Enden 42 mit den verschiedenen Möglichkeiten der Gestaltung der Schweißelektroden und der Anordnung der Enden 42 im Schweißbereich 40 wird an Hand der folgenden Figuren näher eingegangen.

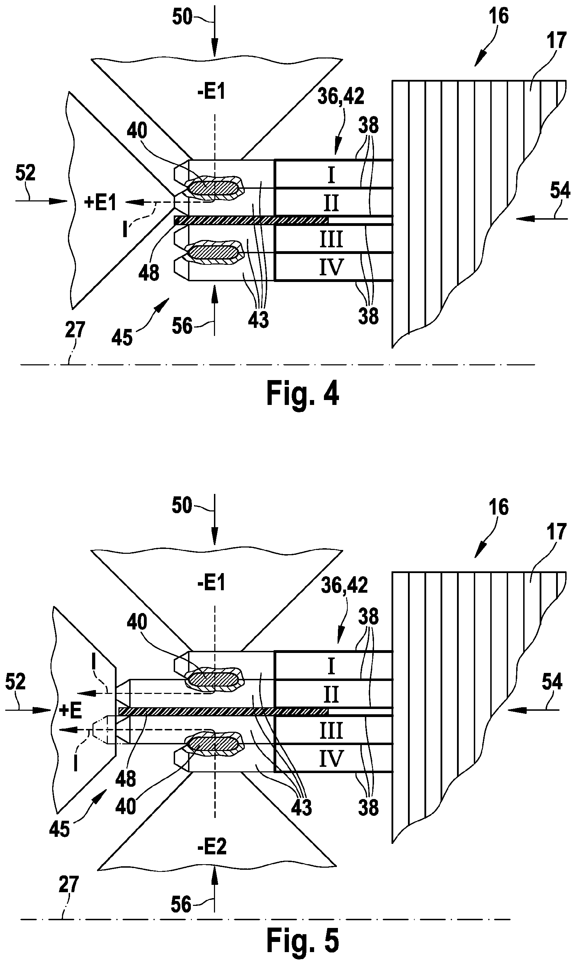

Fig. 4 zeigt eine Anordnung mit vier im antriebsseitigen Wickelkopf 45 radial übereinander angeordneten und paarweise miteinander verschweißten Leitersegmenten 36, deren abisolierte Enden 43 gleich weit aus dem Blechpaket 17 des Stators 16 herausragen und auf gleicher Höhe im Wickelkopf 45 enden. Die einzelnen Leitersegmente 36 sind mit I, II, III und IV bezeichnet, wobei die Leitersegmente I und II, beziehungsweise III und IV im Bereich 40 miteinander verschweißt sind. Zwischen den Leitersegmenten II und III ist eine Isolierung 48 eingefügt. Das Leitersegment I wird durch die negative Schweißelektrode -E1 radial kontaktiert, das Leitersegment II auf seiner Stirnfläche axial durch die positive Elektrode +E1. Hierbei fließt der Schweißstrom I von der Elektrode -E1 zunächst radial durch das Leitersegment I und kehrt dann seine Stromrichtung um in eine axiale Richtung zur positiven Elektrode +E1. Auf diese Weise sind die zu verschweißenden Leitersegmente I und II und in gleicher Weise die Leitersegmente III und IV ohne Schwierigkeiten durch ausreichend massive und damit dauerhafte Schweißelektroden kontaktierbar, welche die in der Fertigung notwendigen Standzeiten aufweisen. Gleichzeitig übernehmen die Elektroden -E1 in radialer Richtung von außen und +E1 in axialer Richtung von der Wickelkopfseite her entsprechend den Pfeilen 50 und 52 die Einspannkräfte für die Positionierung und Arretierung der Leitersegmente 36 während des Schweißvorgangs. Vom Stator 18 und von der Innenseite des Wickelkopfes aus müssen entsprechend den Pfeilen 54 und 56 durch nicht dargestellte mechanische Zusatzeinrichtungen die Anpresskräfte beim Schweißen aufgefangen werden. Die räumliche Ausrichtung der Anordnung gemäß Figur 4 ist ebenso wie in den Figuren 5 bis 7 durch die Mittelachse 27 der Maschine angedeutet.

Fig. 5 zeigt eine Anordnung mit ebenfalls vier, im antriebsseitigen Wickelkopf 45 radial übereinander angeordneten und paarweise miteinander verschweißten Leitersegmenten 36, wobei die beiden mittleren Segmente II und III weiter aus dem Blechpaket 17 herausragen als die äußeren Segmente I und IV. Die Kontaktierung der Leitersegmente I und IV erfolgt jeweils in radialer Richtung durch die Elektrode -E1 von außen und die Elektrode -E2 von innen her, die Leitersegmente II und IV werden durch eine gemeinsame Elektrode +E in axialer Richtung von der Stirnseite der Leitersegmente 36 her kontaktiert. Hierbei fließt der Schweißstrom I von den negativen Elektroden -E1 und -E2 zunächst in radialer Richtung durch die Leitersegmente I und IV und wird wiederum im Bereich 40 der Schweißstellen in axiale Richtung zur positiven Schweißelektrode +E umgelenkt. Die Verschweißung der beiden Leiterpaare I und II, beziehungsweise III und IV kann dabei gleichzeitig erfolgen, wobei durch die positive Elektrode +E gegebenenfalls vorhandene ungleiche axiale Längen der beiden Leitersegmente II und III ausgeglichen werden, indem ein längeres Leitersegment, wie bei dem Segment III angedeutet, durch die Elektrode zunächst abgeschmolzen wird, bevor die beiden Leitersegmente II und III gemeinsam kontaktiert und die Schweißverbindungen 40 hergestellt werden. Bei dieser Anordnung müssen die mechanischen Arretierungskräfte während des Schweißvorgangs nur im Bereich des Blechpaketes 17 entsprechend dem Pfeil 54 aufgefangen werden, die restlichen Positionierungs- und Arretierungskräfte 50, 52 und 56 werden ohne zusätzliche konstruktive Maßnahmen durch die Elektroden selbst aufgebracht.

Die gemeinsame Kontaktierung der Leitersegmente II und III durch eine einzelne Elektrode +E, wie sie in Fig. 5 gezeigt wird, ist auch bei der Anordnung gemäß Fig. 4 verwendbar zur gemeinsamen Kontaktierung der mittleren Leitersegmente II und III. In diesem Fall könnte die negative Elektrode -E1 umgesetzt werden zum Leitersegment IV hin oder es kann auch bei dieser Gestaltung zur Kontaktierung des Leitersegmentes IV eine zusätzliche negative Elektrode -E2 angesetzt werden. Eventuell vorhandene Längenunterschiede der Leitersegmente 36 können dann auch bei der Anordnung gemäß Fig. 4 durch Abschmelzen ausgeglichen und/oder der Schweißvorgang für beide Leiterpaare in einem Arbeitsgang durchgeführt werden.

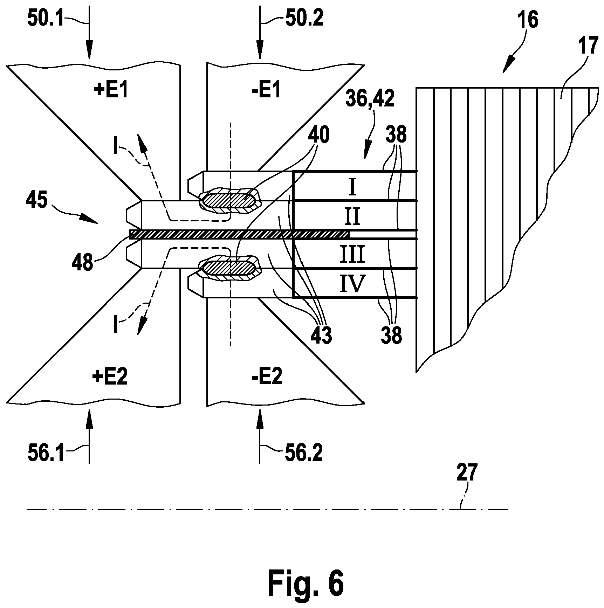

Fig. 6 zeigt die gleiche Konfiguration der Leitersegmente 36 wie Fig. 5. Zur Kontaktierung der Enden 43 beim paarweisen Verschweißen einerseits der Leitersegmente I und II und andererseits der Leitersegmente III und IV werden jedoch vier getrennte Elektroden -E1/+E1 und -E2/+E2 ausschließlich radial angesetzt. Der Schweißstrom I wird hierbei jeweils zweimal umgelenkt von einer radialen in eine axiale und dann wieder in eine radiale Richtung, wobei alle Leitersegmente gut zugänglich sind und die allein in radialer Richtung auftretenden Arretierungskräfte für die Leitersegmente ausschließlich von den Schweißelektroden aufgenommen werden entsprechend den Pfeilen 50.1 und 50.2 sowie 56.1 und 56.2. Axiale Kräfte auf die Leitersegmente 36 treten bei dieser Konfiguration nicht auf.

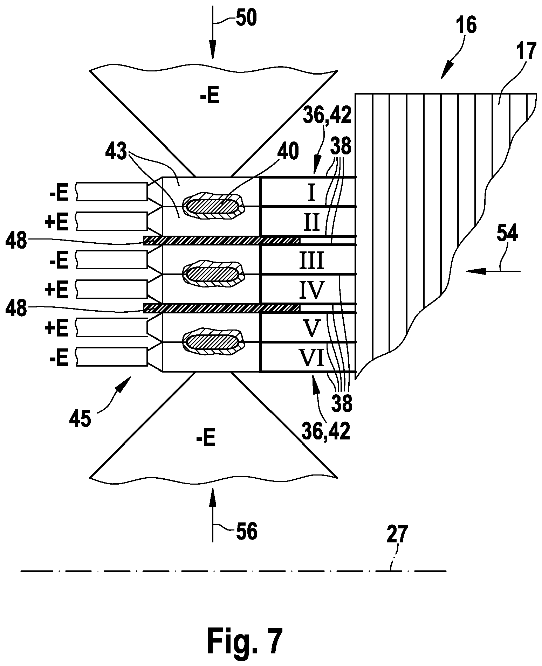

Fig. 7 zeigt eine Anordnung mit sechs im antriebsseitigen Wickelkopf 45 radial übereinander angeordneten Leitersegmenten I-VI, welche wiederum unter Einfügung von Isolierungen 48 an ihren freien und abisolierten Enden 43 paarweise im Bereich der Schweißstellen 40 miteinander verbunden sind. Für die Anordnung der Schweißelektroden -E und +E sind unterschiedliche Möglichkeiten schematisch dargestellt, wobei die äußeren Leitersegmente I und VI vorzugsweise durch radial angesetzten Schweißelektroden -E kontaktiert werden. Ebenso können diese Leitersegmente I und VI jedoch auch axial kontaktiert werden, wie dies für die restlichen Leitersegmente II, III, IV und V dargestellt ist. Eine weitere nicht dargestellte Alternative bestünde auch hier entsprechend den Fig. 5 und 6, wenn beispielsweise die Leitersegmente IV und V axial verlängert und radial oder axial kontaktiert werden. Bei der Verwendung radial angesetzter Schweißelektroden -E können von diesen wiederum die radialen Arretierungskräfte 50 und 56 beim Schweißen aufgefangen werden, bei axialer Kontaktierung einzelner oder aller Leitersegmente müssen von der Seite des Blechpaketes 17 her die erforderlichen Positionierungs- und Arretierungskräfte entsprechend dem Pfeil 54 durch geeignete Einspannmittel für das Blechpaket 17 aufgefangen werden.

Elektrische Maschinen, insbesondere Klauenpolgeneratoren für Kraftfahrzeuge, mit einer Statorwicklung 18 in Stab-, beziehungsweise Steckwicklungstechnik weisen eine sehr gute Durchlüftung der Wickelköpfe 45 und 46 auf und erzeugen auch bei hohen Drehzahlen nur ein relativ geringes Geräusch. Mit den vorgeschlagenen Maßnahmen ergeben sich bei der Herstellung derartiger Statoren 16 erhebliche fertigungstechnische Vorteile, da die Schweißvorgänge deutlich erleichtert und verbessert werden, so dass bei vielen Anwendungen das sehr vorteilhafte WiderstandsSchweißverfahren überhaupt erst ermöglicht wird. Außerdem können mechanische Arretierungs- und Positionierungsmittel weitgehend oder sogar vollständig eingespart und die einem hohen Verschleiß ausgesetzten Elektroden entsprechend massiv und damit langlebig ausgeführt werden, wenn gemäß der Erfindung die Anordnung so getroffen wird, dass die Stromflussrichtung und die Richtung der aufzubringenden Kraft beim Schweißvorgang zumindest teilweise voneinander getrennt werden. Durch die axiale Entzerrung der Anordnung der Leitersegmente 36 wird dabei zusätzlicher Raum für die Gestaltung und die Zugänglichkeit der Schweißelektroden geschaffen.

Durch die Möglichkeit der Verwendung robuster und groß dimensionierter Schweißelektroden wird zusätzlich die Einspeisung höherer Schweißströme I erleichtert, woraus sich kürzere Kontaktierungszeiten mit geringerer Erwärmung ergeben, sodass die Isolation der Leitersegmente 36 durch Hitzeeinwirkungen weniger gefährdet ist. Im Schweißbereich können Kontakte zwischen benachbarten Leitersegmenten durch zusätzliche, nach dem Verschweißen entfernte Einlagen von Isolierungselementen 48 sicher vermieden werden, sodass es in der Schweißzone nicht zu fehlerhaften Kontaktierungen zwischen den Leitersegmenten 36 kommt. Außerdem können die Isolierungen 48 durch geeignete Materialwahl, beispielsweise durch Wahl eines geeigneten Kunststoffes oder einer Keramik, die Kraftübertragung im Bereich der mittleren Leitersegmente übernehmen.

## Patentansprüche

1. Verfahren zur Herstellung einer Stabwicklung (18) für den Stator (16) einer elektrischen Maschine, insbesondere eines Klauenpolgenerators für Kraftfahrzeuge, mit jeweils wenigstens vier im Wickelkopf (45,46) radial übereinander angeordneten und paarweise miteinander verbundenen Leitersegmenten (I-IV;36), wobei die Enden (42) der Leitersegmente (I-IV;36) durch Widerstandsschweißen verbunden werden und hierbei der Schweißstrom (I) in den zu verbindenden Enden (42) der Leiterpaare (I,II;III,IV) teilweise radial und teilweise axial bezüglich der Maschinenachse (27) geführt wird.

2. Verfahren nach Anspruch 1, **dadurch gekennzeichnet, dass** von zwei zu verbindenden Leiterpaaren (I,II;III,IV) jeweils ein Leitersegment (I,IV) radial und wenigstens ein Leitersegment (II,III) axial von einer Elektrode (±E) kontaktiert wird (Figur. 4 und 5).

3. Verfahren nach Anspruch 1 oder 2, **dadurch gekennzeichnet dass** die außen liegenden Leitersegmente (I,IV) von zwei zu verbindenden Leiterpaaren (I,II;III,IV) jeweils von einer separaten, radial arbeitenden Elektrode (-E1,-E2) und die beiden mittleren Leitersegmente (II,III) gemeinsam von einer axial arbeitenden Elektrode (+E) kontaktiert werden (Fig. 5).

4. Verfahren nach einem der vorhergehenden Ansprüche, **dadurch gekennzeichnet, dass** die Enden der innenliegenden Leitersegmente (II,III) von zwei Leiterpaaren (I,II;III,IV) weiter aus dem Blechpaket (17) des Stators (16) herausragen als die äußeren Leitersegmente (I.IV)und gemeinsam durch eine Elektrode (+E) kontaktiert werden (Fig. 5).

5. Verfahren nach Anspruch 4, **dadurch gekennzeichnet, dass** unterschiedlich weit aus dem Blechpaket des Stators (16) herausragende Enden (42) der inneren Leitersegmente (II,III) nach dem Abschmelzen des Überstandes eines längeren Endes durch eine gemeinsame Elektrode (+E) kontaktiert werden (Fig. 5).

6. Verfahren nach Anspruch 1, **dadurch gekennzeichnet, dass** die Enden (42) der innen liegenden Leitersegmenten (II,III) von zwei Leiterpaaren (I,II;III,IV) weiter aus dem Blechpaket (17) des Stators (16) herausragen als die äußeren Leitersegmente (I,IV), und alle Leitersegmente (I-IV) beim Schweißvorgang radial von den Elektroden (±E1,±E2) kontaktiert werden (Fig. 6).

7. Verfahren nach Anspruch 1, **dadurch gekennzeichnet, dass** die Enden (42) aller Leitersegmente (I-VI) der Leiterpaare (I,II;III,IV;V,VI) beim Schweißvorgang axial von den Elektroden (±E) kontaktiert werden (Fig. 7).

8. Verfahren nach Anspruch 1, **dadurch gekennzeichnet, dass** die Enden (42) der außen liegenden Leitersegmente (I,VI) der zu verbindenden Leiterpaare (I,II;III,IV;V,VI) jeweils von einer radial arbeitenden Elektrode (-E) und die mittleren Leitersegmente (II-V) jeweils von einer axial arbeitenden Elektrode (±E) kontaktiert werden (Fig. 7).

9. Verfahren nach einem der vorhergehenden Ansprüche, **dadurch gekennzeichnet, dass** die zu verbindenden Enden (42) der Leitersegmente (I-VI) mit axialem elektrischem Kontakt zueinander angeordnet sind und beim Schweißvorgang durch die Elektroden (±E) zumindest in radialer Richtung (50,54) mechanisch positioniert und gehalten sind.

## Claims

1. Method for producing a bar winding (18) for the stator (16) of an electrical machine, in particular of a claw-pole generator for motor vehicles, having in each case at least four conductor segments (I-IV; 36) which are arranged radially one above another in the end winding (45, 46) and are connected to one another in pairs, wherein the ends (42) of the conductor segments (I-IV; 36) are connected by resistance welding and, in this case, the welding current (I) is passed into the ends (42), which are to be connected, of the conductor pairs (I, II; III, IV) partially radially and partially axially with respect to the machine axis (27).

2. Method according to Claim 1, **characterized in that**, from amongst two conductor pairs (I, II; III, IV) which are to be connected, in each case one conductor segment (I, IV) is radially contacted and at least one conductor segment (II, III) is axially contacted by an electrode (±E) (Figures 4 and 5).

3. Method according to Claim 1 or 2, **characterized in that** the external conductor segments (I, IV) of two conductor pairs (I, II; III, IV), which are to be connected, are each contacted by a separate, radially operating electrode (-E1, -E2), and the two middle conductor segments (II, III) are jointly contacted by an axially operating electrode (+E) (Figure 5).

4. Method according to one of the preceding claims, **characterized in that** the ends of the internal conductor segments (II, III) of two conductor pairs (I, II; III, IV) protrude further out of the laminated core (17) of the stator (16) than the outer conductor segments (I.IV) and are jointly contacted by one electrode (+E) (Figure 5).

5. Method according to Claim 4, **characterized in that** ends (42) of the inner conductor segments (II, III) which protrude by different extents out of the laminated core of the stator (16) are contacted by a common electrode (+E) after the excess length of a relatively long end melts (Figure 5).

6. Method according to Claim 1, **characterized in that** the ends (42) of the internal conductor segments (II, III) of two conductor pairs (I, II; III, IV) protrude further out of the laminated core (17) of the stator (16) than the outer conductor segments (I, IV), and all of the conductor segments (I-IV) are radially contacted by the electrodes (±E1, ±E2) during the welding process (Figure 6).

7. Method according to Claim 1, **characterized in that** the ends (42) of all of the conductor segments (I-VI) of the conductor pairs (I, II; III, IV; V, VI) are axially contacted by the electrodes (±E) during the welding process (Figure 7).

8. Method according to Claim 1, **characterized in that** the ends (42) of the external conductor segments (I, VI) of the conductor pairs (I, II; III, IV; V, VI), which are to be connected, are each contacted by a radially operating electrode (-E), and the middle conductor segments (II-V) are each contacted by an axially operating electrode (±E) (Figure 7).

9. Method according to one of the preceding claims, **characterized in that** the ends (42), which are to be connected, of the conductor segments (I-VI) are arranged with axially electrical contact in relation to one another and are mechanically positioned and held at least in the radial direction (50, 54) by the electrodes (±E) during the welding process.

## Revendications

1. Procédé de fabrication d'un enroulement à barres (18) destiné au stator (16) d'un moteur électrique, notamment d'un alternateur à griffes pour véhicules automobiles, comportant respectivement au moins quatre segments de conducteurs (I-IV ; 36) disposés radialement dans une tête d'enroulement (45,46) et connectés les uns aux autres par paires, dans lequel les extrémités (42) des segments de conducteurs (I-IV) ; 36) sont connectées par soudage par résistance et dans lequel le courant de soudage (I) est ainsi amené à passer dans les extrémités (42) à connecter des paires de conducteurs (I, II ; III, IV) partiellement de manière radiale et partiellement de manière axiale par rapport à l'axe (27) du moteur.

2. Procédé selon la revendication 1, **caractérisé en ce que**, parmi deux paires de conducteurs (I, II ; III, IV) à connecter, un segment de conducteur (I, IV) est mis en contact radialement, et au moins un segment de conducteur (II, III) est mis en contact axialement, avec une électrode (±E) (figures 4 et 5).

3. Procédé selon la revendication 1 ou 2, **caractérisé en ce que** les segments de conducteurs externes (I, IV) de deux paires de conducteurs (I, II ; III ; IV) à connecter sont respectivement mises en contact avec une électrode séparée fonctionnant de manière radiale (-E1, -E2) et **en ce que** les deux segments de conducteurs médians (II, III) sont mis en contact en commun avec une électrode fonctionnant de manière axiale (+E) (figure 5).

4. Procédé selon l'une quelconque des revendications précédentes, **caractérisé en ce que** les extrémités des segments de conducteurs internes (II, III) de deux paires de conducteurs (I, II ; III, IV) font saillie de façon plus prononcée hors du paquet de tôles (17) du stator (16) que les segments de conducteurs externes (I.IV) et sont mis en contact en commun avec une électrode (+E) (figure 5).

5. Procédé selon la revendication 4, **caractérisé en ce que** des extrémités (42) faisant saillie sur une largeur différente hors du paquet de tôles du stator (16) des segments de conducteurs internes (II, III) sont mises en contact après la fusion de la partie en saillie d'une extrémité plus longue avec une électrode commune (+E) (figure 5).

6. Procédé selon la revendication 1, **caractérisé en ce que** les extrémités (42) des segments de conducteurs internes (II, III) de deux paires de conducteurs (I, II ; III, IV) font saillie de façon plus prononcée hors du paquet de tôles (17) du stator (16) que les segments de conducteurs externes (I, IV), et **en ce que** tous les segments de conducteurs (I-IV) sont mis en contact radialement avec les électrodes (±E1, ±E2) lors du processus de soudage (figure 6).

7. Procédé selon la revendication 1, **caractérisé en ce que** les extrémités (42) de tous les segments de conducteurs (I-VI) des paires de conducteurs (I, II ; III, IV ; V, VI) sont mis en contact axialement avec les électrodes (±E) lors du processus de soudage (figure 7).

8. Procédé selon la revendication 1, **caractérisé en ce que** les extrémités (42) des segments de conducteurs externes (I, VI) des paires de conducteurs (I, II ; III, IV ; V, VI) à connecter sont respectivement mises en contact avec une électrode fonctionnant de manière radiale (-E) et **en ce que** les segments de conducteurs médians (II-V) sont respectivement mis en contact avec une électrode fonctionnant de manière axiale (±E) (figure 7).

9. Procédé selon l'une quelconque des revendications précédentes, **caractérisé en ce que** les extrémités (42) à connecter des segments de conducteurs (I-VI) sont disposées les unes par rapport aux autres de manière à ce qu'elles soient en contact électrique axial et **en ce qu'**elles sont positionnées et maintenues mécaniquement au moins en direction radiale (50,54) par les électrodes (±E) lors du processus de soudage.
